(19) Europäisches Patentamt / European Patent Office / Office européen des brevets

(11) **EP 4 462 403 B1**

(12) **EUROPEAN PATENT SPECIFICATION**

(45) Date of publication and mention
of the grant of the patent:
**30.07.2025   Bulletin 2025/31**

(21) Application number: **23173047.4**

(22) Date of filing: **12.05.2023**

(51) International Patent Classification (IPC):
$G08G\ 1/127^{(2006.01)}$        $B60W\ 60/00^{(2020.01)}$
$G06N\ 3/00^{(2023.01)}$          $G06N\ 3/006^{(2023.01)}$
$G06N\ 3/02^{(2006.01)}$          $G06N\ 3/08^{(2023.01)}$
$G06N\ 5/01^{(2023.01)}$          $G06N\ 7/01^{(2023.01)}$
$G06N\ 20/00^{(2019.01)}$        $G06Q\ 10/047^{(2023.01)}$
$G06Q\ 10/08^{(2024.01)}$        $G08G\ 1/00^{(2006.01)}$

(52) Cooperative Patent Classification (CPC):
G08G 1/20; G06N 3/00; G06N 3/006; G06N 3/02;
G06N 3/08; G06N 5/01; G06N 7/01; G06N 20/00;
G06Q 10/047; G06Q 10/08; G06Q 10/08355;
G06Q 50/40; G08G 1/127; G08G 1/202

(54) **A TRAFFIC PLANNING METHOD FOR A VEHICLE FLEET**

VERKEHRSPLANUNGSVERFAHREN FÜR EINE FAHRZEUGFLOTTE

PROCÉDÉ DE PLANIFICATION DE TRAFIC POUR UNE FLOTTE DE VÉHICULES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**13.11.2024   Bulletin 2024/46**

(73) Proprietor: **Volvo Autonomous Solutions AB
405 08 Göteborg (SE)**

(72) Inventors:
• **HELLGREN, Jonas**
**SE-413 16 GÖTEBORG (SE)**
• **KOJCHEV, Stefan**
**SE-431 41 MÖLNDAL (SE)**

(74) Representative: **Kransell & Wennborg KB
P.O. Box 2096
403 12 Göteborg (SE)**

(56) References cited:
EP-A1- 4 095 640        EP-A1- 4 113 241
US-A1- 2020 363 800

• SRIDHAR SABARISH: "SELECTION OF
FEATURES FOR ML BASED COMMANDING OF
AUTONOMOUS VEHICLES SABARISH SRIDHAR
KTH ROYAL INSTITUTE OF TECHNOLOGY
SCHOOL OF ELECTRICAL ENGINEERING AND
COMPUTER SCIENCE", 28 October 2020
(2020-10-28), pages 1 - 65, XP093143307,
Retrieved from the Internet <URL:https://www.
diva-portal.org/smash/get/diva2:1508399/
FULLTEXT01.pdf> [retrieved on 20240320]
• DAVID SILVER ET AL: "Sample-based learning
and search with permanent and transient
memories", PROCEEDINGS OF THE 25TH
INTERNATIONAL CONFERENCE ON MACHINE
LEARNING, ICML '08, ACM PRESS, NEW YORK,
NEW YORK, USA, 5 July 2008 (2008-07-05),
pages 968 - 975, XP058106412, ISBN:
978-1-60558-205-4, DOI: 10.1145/
1390156.1390278
• REMGÅRD MARCUS ET AL: "Towards artificially
playing the game of double pong Combining
learning and search algorithms Master's thesis
in Physics", 1 June 2022 (2022-06-01),
XP093143486, Retrieved from the Internet
<URL:https://odr.chalmers.se/server/api/core/
bitstreams/
dc6a1d25-6d46-425c-9106-e8dc394dffd8/
content> [retrieved on 20240320]

EP 4 462 403 B1

- MAGNUSON MAX: "Monte Carlo Tree Search and Its Applications", SCHOLARLY HORIZONS: UNIVERSITY OF MINNESOTA, MORRIS UNDERGRADUATE JOURNAL, vol. 2, no. 2, 2 September 2015 (2015-09-02), XP093143745, ISSN: 2576-2176, Retrieved from the Internet <URL:https://digitalcommons.morris.umn.edu/cgi/viewcontent.cgi?article=1028&context=horizons> DOI: 10.61366/2576-2176.1028

- SYLVAIN GELLY ET AL: "Monte-Carlo tree search and rapid action value estimation in computer Go", ARTIFICIAL INTELLIGENCE, ELSEVIER SCIENCE PUBLISHER B.V., AMSTERDAM, NL, vol. 175, no. 11, 30 March 2011 (2011-03-30), pages 1856 - 1875, XP028374616, ISSN: 0004-3702, [retrieved on 20110406], DOI: 10.1016/J.ARTINT.2011.03.007

**Description**

TECHNICAL FIELD

The present disclosure relates to the field of centralized vehicle control, and in particular to methods and devices allowing centralized control of a scalable number of vehicles using limited computational resources. The teachings in the disclosure can be applied to heavy-duty vehicles, such as trucks, buses, and construction equipment, among other vehicle types.

BACKGROUND

A fleet of autonomous vehicles (AVs) can be controlled in a distributed (individual) or in a centralized (groupwise) fashion. Centralized control may be advantageous when the vehicles are to operate in a closed environment, especially when space is limited, and/or when the vehicles are carrying out a common utility task. Under the centralized control paradigm, tactical decisions, with a typical horizon of the order of minutes, are entrusted to a so-called traffic planner. The traffic planner reads current vehicle positions and other relevant state variables of the traffic system and determines commands to be given to each vehicle at times within a planning horizon. The traffic planner may be instructed to determine the commands with a view to maximizing productivity and/or minimizing cost, and the fleet owner can express the desired balance between these goals by configuring weighting coefficients. Decision-making on a shorter timescale than the tactical one, including vehicle stabilization and collision avoidance, may be delegated to each vehicle.

Document XP093143307 entitled "Selection of Features for ML based commanding of autonomous vehicles" by SABARISH SRIDHAR, KTH ROYAL INSTITUTE OF TECHNOLOGY SCHOOL OF ELECTRICAL ENGINEERING AND COMPUTER SCIENCE, 29-10-2020, https://www.diva-portal.org/smash/get/diva2:1508399/ FULLTEXT01.pdf discloses the use of a variant of reinforcement learning and simulation-based search techniques known as Dyna-2 for traffic coordination.

As noted in the applicant's prior disclosure EP4095640A1, the automatic control of a vehicle fleet of already a moderate size can require computationally very demanding problems to be solved. EP4095640A1 addresses this difficulty by proposing discloses vehicle-control techniques that optimize the use of a predefined computational budget. In particular, it supports such traffic planning where potential vehicle trajectories to be evaluated are represented as a tree-like structure.

US2020363800A1 discloses a method for behavioral planning in an AV. The method comprises: generating a current driving scene state from environment data and localization data; generating a probability of distribution of actions and an estimated scene value based on the current driving scene state, driving scene state history and a strategic vehicle goal state; selecting an action from the probability of distribution of actions; determining estimated trajectories of non-AV actors based on the selected action, the current driving scene state, the driving scene state history, and the strategic vehicle goal state; determining estimated trajectory of the AV based on at least the selected action and the estimated scene value; determining a drive action based on maximizing scene value to reach the strategic vehicle goal state; and updating a controller with one of a trajectory or commands to control the AV, wherein the trajectory or the commands are based on determined drive actions. To address the significant computational complexity of this control problem, US2020363800A1 proposes a probabilistic explorer which reduces the breadth and depth of the potentially infinite tree of actions being explored, allowing for an accurate prediction on a future scene to a defined time horizon and an appropriate selection of a goal state anywhere within that time horizon. The probabilistic explorer uses a neural network to suggest the best actions for the AV and scene values, and a modified Monte Carlo Tree Search (MCTS) to identify a sequence of actions, where exploration is guided by the neural network.

**SUMMARY**

An objective of the present disclosure is to make available methods and devices for centrally controlling a scalable number of vehicles. The methods and devices should preferably be suitable for the control of autonomous vehicles. It is a particular objective to propose vehicle control techniques that optimize the use of a predefined computational budget (e.g., the computational budget may be expressed as the maximum number $L_{max}$ of leaves which a search tree may include or as a maximum processing time that may be devoted to generating the search tree). A still further objective is to support the evaluation of potential vehicle trajectories represented as a tree-like structure.

In a first aspect of the present disclosure, there is provided a computer-implemented traffic planning method for controlling a plurality of vehicles which are movable among multiple shared resources in accordance with predefined motion commands. It is assumed that a vehicle is allowed to move from a first resource to a second resource if the first resource is connected to the second resource and the second resource is not occupied. Each resource represents space for transport or parking, a communication channel, maintenance machinery or additional equipment for optional temporary use. The method comprises the following steps to be performed by processing circuitry of a computer system: receiving (e.g., from an operator or a system owner) a transport mission to be carried out by the vehicles; generating a root node representing an initial resource occupancy of the vehicles; sequentially generating a search tree from the root node, in which each edge represents a motion command and each node represents a resource occupancy, wherein each node is associated with a score including an anticipated reward related to the vehicles' fulfilment of the transport mission; identifying, among the nodes of the search tree, a target node with an acceptable score; and deriving a planned sequence of motion commands corresponding to a path from the root node to the target node. According to said first aspect, the sequential generating of the search tree comprises: generating child nodes of a leaf node only if the leaf node satisfies a tree-expansion criterion; evaluating any generated child node with respect to the vehicles' fulfilment of the transport mission and assigning a corresponding reward to the child node's score; and adding an anticipated value of the assigned reward to the scores of all parent nodes of said child node. The tree-expansion criterion is satisfied if the leaf node represents a resource occupancy which is not a deadlock state and/or no vehicle has a battery-energy level below an energy threshold.

The tree-expansion criterion is configured to discard only non-promising trajectories, such as trajectories that lead into deadlock states. Because of this criterion, the total computational load can be efficiently limited without detriment. Indeed, a technical benefit can be that the traffic planning method is capable of consistent and foresightful vehicle control while consuming a moderate amount of processing resources.

The tree-expansion criterion is satisfied if the leaf node represents a resource occupancy which is note a deadlock state. A deadlock state may be one where no vehicles are able to move. A deadlock state may correspond to a real-life scenario where the controlled vehicles need external help to resume operation, such as operator intervention, towing etc.

Optionally in some examples, including in at least one preferred example, the tree-expansion criterion includes a sub-criterion governing how many child nodes are to be generated. For example, the sub-criterion may stipulate that two or more child nodes are to be generated if the leaf node represents a resource occupancy where at least one vehicle has entered a conflict zone and/or at least one vehicle is located in a split zone.

Optionally in some examples, including in at least one preferred example, the leaf node shall remain a leaf node in the search tree if the tree-expansion criterion is not satisfied.

Optionally in some examples, including in at least one preferred example, the step of evaluating a child node comprises simulating vehicle movements subject to rule-based motion commands for a predetermined period of time. In particular, the evaluation of a child node may comprise performing one or more simulations of vehicle movements subject to random motion commands for a predetermined period of time, and assigning the reward based on that one of the simulations which, among these, is found to have the best fulfilment of the transport mission.

Optionally in some examples, including in at least one preferred example, the score of a node in the search tree further includes - in addition to the anticipated reward - a cost of executing all motion commands from the root node to said node. Alternatively or additionally, the score further includes - in addition to the anticipated reward - a cost representing a total standstill time of the vehicles.

Optionally in some examples, including in at least one preferred example, the identified target node has a score (acceptable score) which is the maximal score in the search tree. Alternatively, the identified target node has a score (acceptable score) that exceeds a predefined score threshold, regardless of the maximality.

Optionally in some examples, including in at least one preferred example, the vehicles are autonomous vehicles.

In a second aspect of the present disclosure, there is provided a computer system comprising processing circuitry configured to control a plurality of vehicles which are movable among multiple shared resources in accordance with predefined motion commands. It is assumed that a vehicle is allowed to move from a first resource to a second resource if the first resource is connected to the second resource and the second resource is not occupied. Each resource represents space for transport or parking, a communication channel, maintenance machinery or additional equipment for optional temporary use. The computer system is configured to: receive a transport mission to be carried out by the vehicles; generate a root node representing an initial resource occupancy of the vehicles; sequentially generate a search tree from the root node, in which each edge represents a motion command and each node represents a resource occupancy, wherein each node is associated with a score including an anticipated reward related to the vehicles' fulfilment of the transport mission; identify, among the nodes of the search tree, a target node with an acceptable score; and derive a planned sequence of motion commands corresponding to a path from the root node to the target node. According to the second aspect, the sequential generating of the search tree comprises: generating child nodes of a leaf node only if the leaf node satisfies a tree-expansion criterion; evaluating any generated child node with respect to the vehicles' fulfilment of the transport mission and assigning a corresponding reward to the child node's score; and adding an anticipated value of the assigned reward to the scores of all parent nodes of said child node. The tree-expansion criterion is satisfied if the leaf node represents a resource occupancy which is not a deadlock state and/or no vehicle has a battery-energy level below an energy threshold.

The computer system according to the second aspect generally shares the benefits and advantages of the method according to the second aspect, and it can be implemented with a corresponding degree of technical variation.

This disclosure further provides a vehicle comprising the computer system of the second aspect.

This disclosure further provides a computer program or a computer program product comprising program code which, when the program code is executed by a processing circuitry, cause the processing circuitry to perform the method of the first aspect. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Aspects and embodiments are now described, by way of example, with reference to the accompanying drawings, in which:

figure 1 is a flowchart of a traffic planning method;

figure 2 shows an exemplary computer system suitable for controlling a plurality of vehicles;

figures 3 is a schematical representation of a road network with numbered waypoints that are modeled as shared resources in the traffic planning method;

figure 4 shows example vehicles that can be controlled centrally using teachings from the present disclosure;

figure 5 illustrates a search tree in which each edge represents a motion command and each node represents a resource occupancy; and

figure 6 refers to a schematical representation of a road network with numbered waypoints that are modeled as shared resources in the traffic planning method, wherein the subfigures show two different example resource occupancies.

## DETAILED DESCRIPTION

The detailed description set forth below provides information and examples of the disclosed technology with sufficient detail to enable those skilled in the art to practice the disclosure.

### System overview

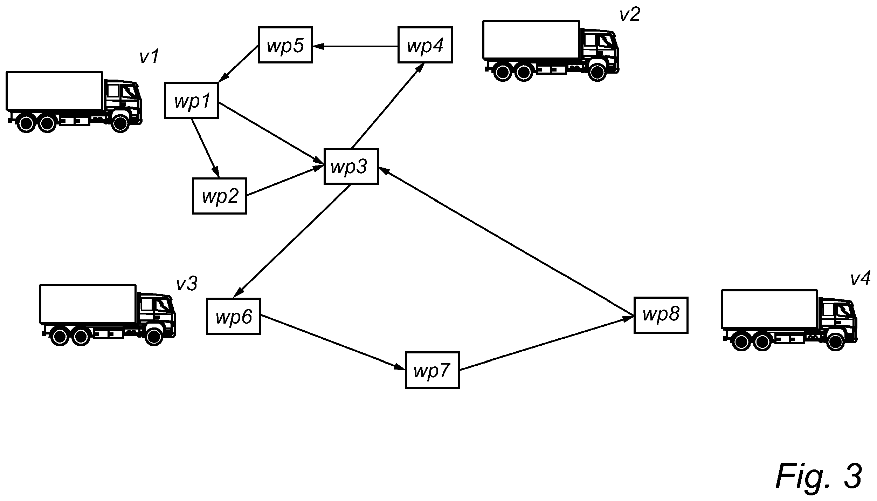

Figure 3 is a schematic representation of a road network. For the purpose of traffic planning, a number of waypoints have been defined, including at road junctions wp1, wp3 and at some intermediate locations wp2, wp4, wp5, ..., wp8. Some of the intermediate locations may be road segments, and others may correspond to so-called absorption nodes, where a visiting vehicle is required to dwell for a predetermined or variable time, for purposes of loading, unloading, maintenance etc. The arrangement of the waypoints is not essential to the present invention, rather their locations and number may be chosen (defined) as deemed necessary in each use case to achieve smooth and efficient traffic planning. The waypoints are treated as resources which are shared by a plurality of vehicles v1, v2, v3, v4. Abstractly, a resource may be understood as a logical entity which is either free or occupied by exactly one vehicle at a time. Resources may represent physical space for transport or parking, a communication channel, maintenance machinery, additional equipment for optional temporary use, such as tools or trailers. An occupied resource is not consumed but can be released for use by the same or another vehicle.

The traffic planning method to be described below observes a rule that a vehicle shall be allowed to move from a first resource to a second resource if the first resource is connected to the second resource and the second resource is not occupied. The connections may be modelled as unidirectional or bidirectional edges in a graph representing the road network. Under the former option, as exemplified by figure 3, a bidirectional road section between two waypoints can be modelled as two antiparallel connections.

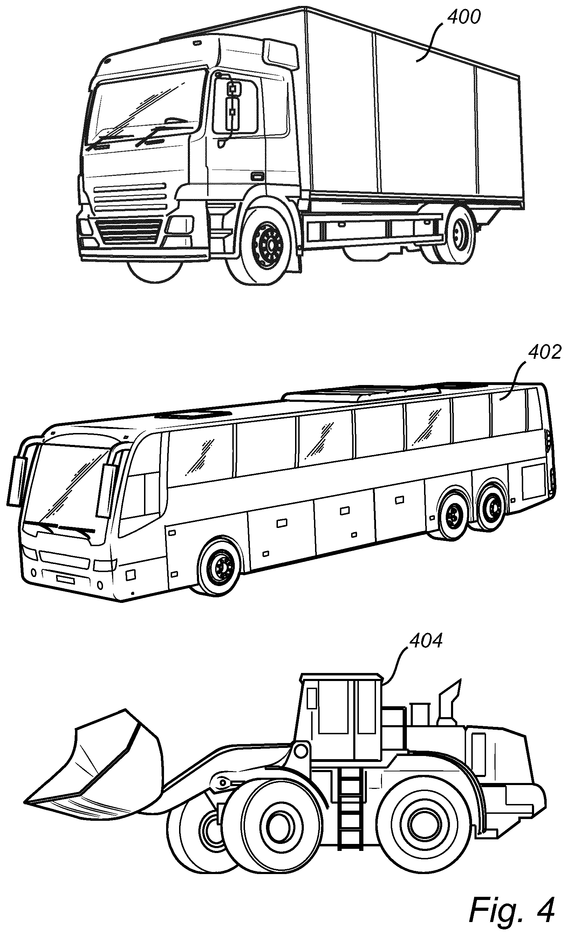

It is further assumed that each vehicle (see examples in figure 4) is controllable by an individual control signal, which may indicate a command from a finite set of predetermined commands. If the vehicles are autonomous, the control signal may be a machine-oriented signal which controls actuators in the vehicle; if the vehicles are conventional, the control signals may be human-intelligible signals directed to their drivers. It is understood that individual control signals may be multiplexed onto a common carrier. A predefined command may represent an action to be taken at the next waypoint (e.g., continue straight, continue right, continue left, stop), a next destination, a speed adjustment, a loading operation or the like. Implicit signaling is possible, in that a command has a different meaning depending on its current state (e.g., toggle between an electric engine and a combustion engine, toggle between high and low speed, drive/wait at the next waypoint). A vehicle which receives no control signal or a neutrally-valued control signal may be configured to continue the previously instructed action or to halt. The predetermined commands preferably relate to tactical decision-making, which corresponds to a time scale typically shorter than strategic decision-making and typically longer than operational (or machine-level) decision-making. Different vehicles may have different sets of commands.

One aim of the present disclosure is to enable efficient centralized control of the vehicles v1, v2, v3, v4. The vehicles v1, v2, v3, v4 are to be controlled as a group, with mutual coordination. The mutual coordination may entail that any resource-utilization conflicts that could arise between vehicles are deferred to a planning algorithm and resolved at the planning stage. The planning may aim to maximize productivity, such as the total quantity of useful transportation work (e.g., in relation to a transport mission) or the percentage of on-schedule deliveries of goods. The planning may additionally aim to minimize cost, including fuel consumption, battery wear, wear on mechanical components, and the like.

Regarding the resource utilization conflicts that may arise, it may initially be noted that if each vehicle moves one waypoint per epoch, then no vehicle blocks this movement of any other vehicle for the node occupancy (start state) shown in figure 3. The illustrated resource occupancy can be expressed as:

$$O\begin{pmatrix} v1 \\ v2 \\ v3 \\ v4 \end{pmatrix} = \begin{pmatrix} wp1 \\ wp4 \\ wp6 \\ wp8 \end{pmatrix}. \qquad (1)$$

It can also be seen that this resource occupancy provides each vehicle with a next waypoint to which it can move in a next epoch. The choice is not arbitrary, however, as both vehicles v1 and v4 may theoretically move to waypoint wp3, but this conflict can be avoided by routing vehicle v1 to waypoint wp2 instead. If the system is evolved in the second manner, that is,

$$O\begin{pmatrix} v1 \\ v2 \\ v3 \\ v4 \end{pmatrix} = \begin{pmatrix} wp2 \\ wp5 \\ wp7 \\ wp3 \end{pmatrix},$$

then vehicle v4 will block vehicle v1 from moving to the next waypoint wp3. This blocking state temporarily reduces the vehicle system's productivity but will be resolved once vehicle v4 continues to waypoint wp4.

It is easy to realize that the difficulty of the blocking states (as measured, say, by the number of vehicle movements needed to reach a non-blocking state) in a given waypoint topology will increase with the number of vehicles present. The efficiency gain of deploying marginally more vehicles to solve a given transport mission in a given environment may therefore be offset by the increased risk of conflicts. A waypoint topology populated with many vehicles may also have more deadlock states, i.e., states where no vehicle movement is possible. A deadlock state is a special case of a blocking state, where no vehicle can move. It may correspond to a real-life scenario where the controlled vehicles need external help to resume operation, such as operator intervention, towing etc.

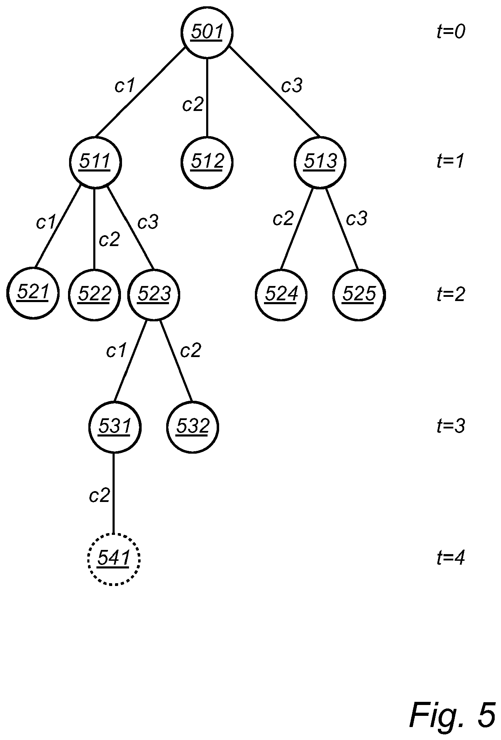

The following description is made under an assumption of discrete time, that is, the traffic system evolves in evenly spaced epochs, which can be identified by their serial number t = 0, 1, 2, 3 ..... Figure 5 shows a search tree, in which each edge represents a motion command c1, c2, c3 and each node 501, 511, 512, ... represents a resource occupancy. The levels of the search tree, which can be identified by their respective distance from the root node, correspond to consecutive epochs, as shown by the annotation on the right-hand side.

The duration of an epoch may be of the order of 0.1 s, 1 s, 10 s or longer. At each epoch, either a command is given to one of the vehicles v1, v2, v3, v4, a set of commands is given to a group of vehicles, or no command is given. In figure 5, the symbols c1, c2, c3 may refer to single commands or a set of commands. In practical implementations, it may be necessary to distribute multiple quasi-simultaneous commands v1.c1, v2.c1, which address multiple vehicles v1, v2 or vehicle groups, over two or more consecutive epochs; to allow such approximate simultaneity, the epoch length may be configured shorter than the typical time scale of the tactical decision-making for one vehicle.

The rule that a vehicle shall be allowed to move from a first resource to a second resource if the first resource is connected to the second resource and the second resource is not occupied eliminates a number of potential commands. As shown by the search tree in figure 5, while some resource occupancies (as defined by the corresponding nodes) allow the full selection of commands c1, c2, c3, other resource occupancies allow only a subset of these commands, or none at all. With this setup, the space of possible planning outcomes is at most equal to the set of all command sequences of length d, where d is the planning horizon (or lookahead horizon). The number of nodes in an unrestricted search tree - and hence the computational effort - grows exponentially with the length d. It is an aim of the present disclosure to propose ways to temper the growth of the search tree while still achieving planning outcomes that perform well. Tempering the growth of the search tree could mean, on the one hand, limiting the local branching factor and, on the other hand, relying on an early success indicator (long-term component) to stop the depth-wise growth into unfruitful directions.

## Traffic planning method

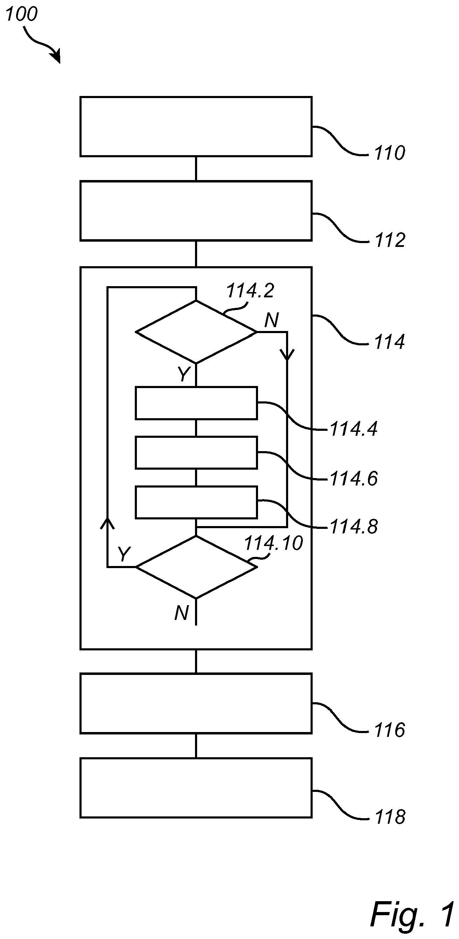

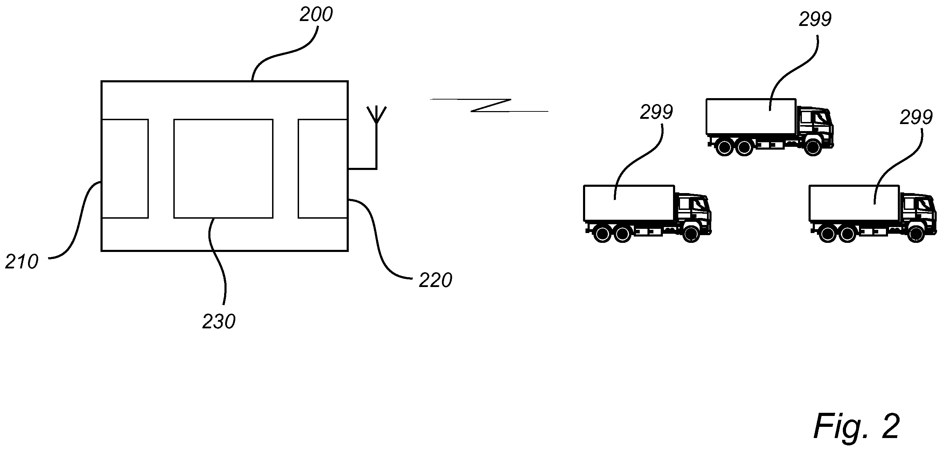

With reference now to the flowchart in figure 1, a traffic planning method 100 according to an example embodiment will be described. The method 100 may be implemented by a general-purpose programmable computer, notably of a type corresponding to the computer system 200 which will be described below with reference to figure 2.

The method 100 is concerned with a plurality of vehicles which are movable among multiple shared resources in accordance with predefined motion commands, and subject to a rule that a vehicle is allowed to move from a first resource to a second resource if the first resource is connected to the second resource and the second resource is not occupied. In the running execution of the method 100, the input data includes an initial resource occupancy of the vehicles (see example in equation (1) above), and the output data includes a planned sequence of motion commands which can be executed by the vehicles. Further, the execution of the method 100 is responsive to additional data, including a transport mission to be carried out by the vehicles and a definition of the predefined motion commands. The additional data can be acquired or determined by the computer system 200 in any order. Normally the additional data need not be re-acquired or re-determined when a new execution cycle starts (i.e., from a new initial resource occupancy).

In one step 110 of the method 100, the transport mission to be carried out by the vehicles is acquired by the computer system 200. The transport mission may be received from an operator or a system owner, or another entity in whose interest the controlled vehicles operate. The transport mission may be an open mission, such as "keep moving items from a loading station to an unloading station", wherein the characteristics of the items (e.g., goods, objects, products) may be specified but not their total quantity. Although the progress of an open transport mission can be quantified (e.g., in terms of the number, mass or volume of the moved items), its execution generally speaking goes on without reaching any definite state of being completed. The method 100 can also be used for closed transport missions, such as "move the three items at the loading station to the unloading station", for which there is a well-defined final state, i.e., the three items are located at the unloading station. The open vs closed nature of the transport mission may sometimes be relevant for the definition of the score to be discussed below.

In a further step 112, which can be executed before or after step 110, or overlapping in time with step 110, a root node of a search tree is generated. The root node represents an initial resource occupancy of the vehicles. The initial resource occupancy may be obtained from a traffic control entity communicating with the vehicles, from sensors detecting the positions of the vehicles, or from a reply to a self-positioning query issued to the vehicles.

In a further step 114, a search tree, in which each edge represents a motion command and each node represents a resource occupancy, is generated sequentially by adding nodes starting from the root node. The search tree may be represented as a data structure in a runtime memory of the computer system 200. Each node is associated with a score including an anticipated reward related to the vehicles' fulfilment of the transport mission. Figure 5 shows an example search tree, where the root node carries reference symbol 501, and the edges carry reference symbols c1, c2 or c3, which denote the corresponding motion command. It is appreciated that each node uniquely determines a resource occupancy; it can be found by executing motion commands from the root node to the node at issue. However, multiple nodes can determine identical resource occupancies, which is because a resource occupancy can in general be reached from an initial resource occupancy by two or more sequences of motion commands which achieve equivalent results.

The anticipated reward may be computed based on two inputs, one being the reward R as such and the other being a discount function $f(p)$ representing the theoretical economic disadvantage of collecting the reward only after a delay. It is assumed for the purposes of this disclosure that the transport mission affects the reward but not the discount function, and that the discount function depends only on the duration p of the delay (in epochs). The reward R can be defined in several alternative ways, including as a percentage to which a closed-type transport mission has been completed, or as a number/mass/volume of goods that has been transported within an open-type transport mission. The reward can further be triggered by a certain motion command, notably in connection with transport missions of the open type (e.g., circulate the vehicles on a predefined road loop that includes a loading station and an unloading station), in which a vehicle entering a certain resource corresponds - almost certainly - to a unit of completed productive transportation work. Computing the *anticipated* reward from a known future reward may correspond to reducing the future reward by the discount function, that is, $R \times f(p)$, where $f(0) = 1$ and $0 < f(p) < 1$ for $p \geq 1$. In an example, the discount function is a discount factor $0 < \gamma < 1$ raised to a power corresponding to the delay p of the reward. In an example, if the movements of the vehicles will lead to (a partial) fulfilment of the transport mission at node 541, then a reward of, say, R = 20 units is assigned to the node 541 (epoch t = 4), an anticipated reward of $20\gamma$ is assigned to the node 531 (epoch t = 3), an anticipated reward of $20\gamma^2$ is assigned to the node 523 (epoch *t* = 2), an anticipated reward of $20\gamma^3$ is assigned to the node 511 (epoch *t* = 1), and an anticipated reward of $20\gamma^4$ is assigned to the root node 501 (epoch t = 0). In general, a reward R which will be collected p epochs later corresponds to an anticipated reward of $R \times \gamma^p$.

In some implementations, the score can further include a cost component, which has the opposite sign as the (anticipated) reward. The cost component may be computed on the basis of a cost lookup table, where each of the predefined motion commands is related to a respective cost. The cost may be an estimated value, a simulated value, or a measured value. To determine the short-term component, the relevant costs are read from the cost lookup table and summed over all epochs t = 1, 2, 3, .... For example, the short-term component of node 541 can be computed as

$$-C(c1) - C(c3) - C(c1) - C(c2),$$

where $C(\cdot)$ denotes a cost function read from the lookup table. It is recalled that the symbols c1, c2, c3 in the search tree may refer to sets or vectors of motion commands - directed to multiple vehicles or all vehicles - and the summation shall run over all vehicles concerned. In other implementations, where the cost is uniform or approximately uniform for executing each of the predefined motion commands, it might not be necessary to include a dedicated cost component into the score. Indeed, trajectories leading up to faraway nodes in the search tree will be less attractive already by the action of the discount function.

In the present method 100, the step 114 of generating the search tree further includes conditional substeps. More precisely, if a tree-expansion criterion can be verified (step 114.2, Y branch), then one or more child nodes of a leaf node shall be generated (step 114.4) but otherwise not (N branch). In one example, the tree-expansion criterion is defined in such manner that it is satisfied if the leaf node represents a resource occupancy which is not a deadlock state. If the resource occupancy is a deadlock state, according to the inventors' realization, there is a limited likelihood of arriving at an advantageous planning outcome. In another example, the tree-expansion criterion is defined in such manner that it is satisfied if no vehicle has a battery-energy level (e.g., expressed as state of energy, SoE) below an energy threshold. The battery-energy level may be a simulated or predicted battery-energy level. Because the tree-expansion criterion is applied, the search tree will not expand in an unrestricted fashion, which could in some cases correspond to an exponential growth of the computational complexity of the traffic-planning task with respect to the planning horizon.

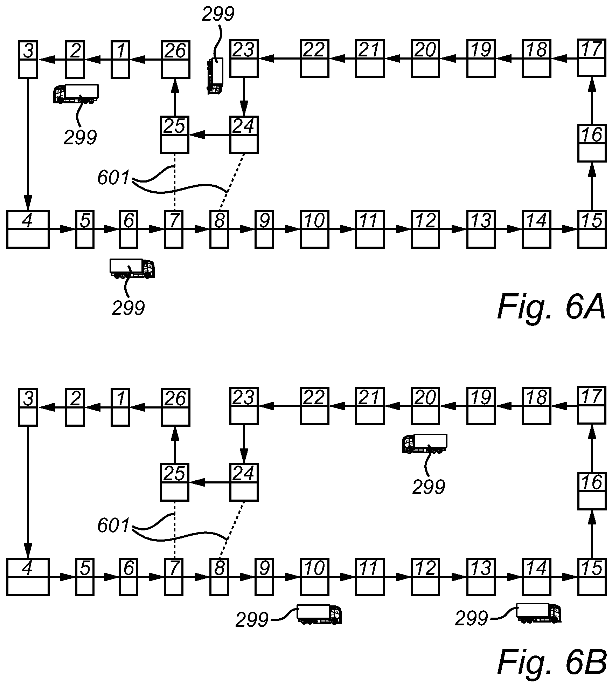

Optionally, the tree-expansion criterion 114.2 includes a sub-criterion governing how many child nodes are to be generated. The sub-criterion may stipulate, for example, that two or more child nodes are to be generated if the leaf node represents a resource occupancy where at least one vehicle has entered a conflict zone and/or at least one vehicle is located in a split zone. In the terminology of the present disclosure, a "conflict zone" is a resource with two or more alternative entry points (e.g., waypoint wp3 in figure 3), and a "split zone" is a resource which a vehicle may leave using two or more alternative exit points (e.g., waypoints wp1 and wp3 in figure 3). Because there are multiple choices for the onward travel of the vehicles in these conditions, it is justified to generate an increased number of child nodes so as to ensure a more complete evaluation. To illustrate, reference is made to figure 6, which shows a road network with numbered resources (waypoints) for two different resource occupancies. The dotted lines 601 indicate a local single-lane topology of the road network, to the effect that no two vehicles can simultaneously occupy resources 7 and 25, nor can they simultaneously occupy resources 8 and 24. In figure 6A, three vehicles 299 occupy resources 2, 6, and 23. In figure 6B, three vehicles 299 occupy resources 10, 14 and 20. Because two vehicles in figure 6A occupy resources from which they can enter the single-lane section corresponding to the set {7, 8, 24, 25}, the sub-criterion will evaluate positive. In figure 6B, however, there is no apparent justification to generate multiple child nodes, and the sub-criterion will ensure that the computing resources that this would have consumed can be used elsewhere.

If one or more child nodes are generated, then each node is evaluated (step 114.6) with respect to the vehicles' fulfilment of the transport mission, a corresponding reward R is assigned to the child node's score. In other words, the reward shall be assigned to the child node's score only if the child node represents a resource occupancy or a vehicle movement in which one or more vehicles trigger this reward.

In some implementations of the method 100, the evaluation 114.6 of a child node may comprise simulating vehicle movements for a predetermined period of time. The simulation may be a computer simulation, where the vehicles are advanced epoch by epoch in accordance with predefined rules (rule-based motion commands) or at random. Optionally, a plurality of such computer simulations are carried out under slightly different conditions. The predefined rules may include a decision rule which each vehicle applies. For example, the vehicle may be assumed to continue along a predefined loop unless it encounters another vehicle, in which case it either waits or tries to make a detour around the other vehicle in accordance with predefined traffic rules. Further vehicle may apply a local-optimization rule, such as greedy decision-making aiming to

- obtain a reward for completing the transport mission but without consideration of the other vehicles,

- minimize the self-vehicle's standstill time, and/or

- minimize the self-vehicle's energy consumption.

Under the random option, sampling from a random distribution determines whether and which motion command will be applied to a vehicle in the next epoch. This may be considered to correspond to an uncoordinated control of the vehicles, which provides a fair idea of the desirability of the resource occupancy determined by the child node, from which the vehicle movements begin. During the simulation, the value of the reward is computed for each new resource occupancy. Optionally, a plurality of such random-driven computer simulations is carried out, and the reward is assigned in the basis of that one of the simulations which has the best fulfilment of the transport mission.

In such implementations of the method 100 where the evaluation 114.6 of a child node comprises simulating vehicle movements for a predetermined period of time, the total standstill time of the vehicles is computed and used to compute a further contribution to the score. The standstill contribution is inversely related to the total standstill time; for example, it may be defined as a negatively signed term proportional to the total standstill time ($-k_1 \times T_{still}$), or it may be a positively signed term proportional to a multiplicative inverse of the total standstill time ($k_2 \times 1/T_{still}$). the total standstill time as this generally indicates poor planning efficiency and/or congestion of a traffic system. A benefit of adding the standstill contribution to the score may include that the growth of the search tree into such directions which are likely to involve significant standstill time will be restricted. The presence of the standstill contribution tends to break the exponential growth of the size of the search tree with respect to the planning horizon.

Further, if a reward has been assigned to a child node's score, then a backpropagation (step 114.8) is carried out, in which an anticipated value of the assigned reward to the scores of all parent nodes of said child node. As seen above, the anticipated reward may be equal to $R \times f(p)$ for a node in the search tree which is located p levels above the child node. It is understood that, in such implementations of the method 100 where the score includes a standstill contribution, also the anticipated value of the standstill contribution is to be backpropagated to the parent nodes.

With this, step 114 is completed for this execution cycle of the method 100.

Once the search tree is deemed complete, in a step 116, a target node with an acceptable score is identified among the nodes of the search tree. The search tree may be deemed to be complete when the tree-expansion criterion evaluates false for all leaf nodes. The target node may be the node with the maximal score of all nodes in the search tree. Alternatively, the target node may be a node whose score exceeds a predefined score threshold, in particular the first generated node whose score exceeds the score threshold. In one example, the steps 114 and 116 can be implemented with a Monte Carlo tree search (MCTS) as baseline.

To the identified target node, there is a unique path from the root node. From this path, it is possible to derive, in a step 118, a planned sequence of motion commands, which forms the output of the method 100.

Figure 2 shows, in accordance with a further embodiment, a computer system 200 for controlling a plurality of vehicles 299 sharing a set of resources. The computer system 200 may be fixedly installed or carried in a vehicle 299. The computer system 200, which may alternatively be referred to as a traffic planner, has an interface 220 configured to receive an initial resource occupancy of the vehicles 299. Optionally, it may further receive, for each vehicle, information representing a set of predefined commands, which can be fed to the respective vehicles, and/or a transport mission (utility task) to be carried out by the vehicles 299. The initial resource occupancy may be obtained from a traffic control entity (not shown) communicating with the vehicles 299, from sensors (not shown) detecting the positions of the vehicles 299, or from a reply to a self-positioning query issued to the vehicles 299. The optional information may be entered into the interface 220 by an operator or provided as configuration data once it is known which vehicles 299 will form the fleet. The interface 220 of the computer system 200 is further configured to feed commands selected from said predefined commands to said plurality of vehicles, and especially the planned sequence of motion commands. Figure 2 shows direct wireless links from the interface 220 to the vehicles 299. In other embodiments, as explained above, the interface 220 may instead feed sequences of the predefined commands to the traffic control entity, which takes care of the delivery of the commands to the vehicles 299.

The computer system 200 further comprises processing circuitry 230 configured to perform the method 100 described above. It may optionally include a memory 210 suitable for storing configuration data relating to the method 100.

Figure 4 shows a truck 400, a bus 402 and a construction equipment vehicle 404. A fleet of vehicles of one or more of these types, whether they are autonomous or conventional, can be controlled in a centralized fashion using the method 100 or the device 200 described above.

**Remarks on the computer system**

Some additional remarks are of order concerning the schematic diagram of the computer system 200 for implementing examples disclosed herein. The computer system 200 is adapted to execute instructions from a computer-readable medium to perform these and/or any of the functions or processing described herein. The computer system 200 may be connected (e.g., networked) to other machines in a LAN, an intranet, an extranet, or the Internet. While only a single device is illustrated, the computer system 200 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 200 may comprise at least one computing device or electronic device capable of including firmware, hardware, and/or executing software instructions to implement the functionality described herein. The computer system 200 may include processing circuitry 230 (e.g., processing circuitry including one or more processor devices or control units), a memory, and a system bus. The computer system 200 may include at least one computing device having the processing circuitry 230. The system bus provides an interface for system components including, but not limited to, the memory and the processing circuitry 230. The processing circuitry 230 may include any number of hardware components for conducting data or signal processing or for executing computer code stored in memory. The processing circuitry 230 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 230 may further include computer executable code that controls operation of the programmable device.

The system bus may be any of several types of bus structures that may further interconnect to a memory bus (with or without a memory controller), a peripheral bus, and/or a local bus using any of a variety of bus architectures. The memory may be one or more devices for storing data and/or computer code for completing or facilitating methods described herein. The memory may include database components, object code components, script components, or other types of information structure for supporting the various activities herein. Any distributed or local memory device may be utilized with the systems and methods of this description. The memory may be communicably connected to the processing circuitry 230 (e.g., via a circuit or any other wired, wireless, or network connection) and may include computer code for executing one or more processes described herein. The memory may include non-volatile memory (e.g., read-only memory (ROM), erasable programmable read-only memory (EPROM), electrically erasable programmable read-only memory (EEPROM), etc.), and volatile memory (e.g., random-access memory (RAM)), or any other medium which can be used to carry or store desired program code in the form of machine-executable instructions or data structures and which can be accessed by a computer or other machine with processing circuitry. A basic input/output system (BIOS) may be stored in the non-volatile memory and can include the basic routines that help to transfer information between elements within the computer system 200.

The computer system 200 may further include or be coupled to a non-transitory computer-readable storage medium such as the storage device, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 200 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device and/or in the volatile memory, which may include an operating system and/or one or more program modules. All or a portion of the examples disclosed herein may be implemented as a computer program stored on a transitory or non-transitory computer-usable or computer-readable storage medium (e.g., single medium or multiple media), such as the storage device, which includes complex programming instructions (e.g., complex computer-readable program code) to cause the processing circuitry 230 to carry out actions described herein. Thus, the computer-readable program code of the computer program can comprise software instructions for implementing the functionality of the examples described herein when executed by the processing circuitry 230. In some examples, the storage device may be a computer program product (e.g., readable storage medium) storing the computer program thereon, where at least a portion of a computer program may be loadable (e.g., into a processor) for implementing the functionality of the examples described herein when executed by the processing circuitry 230. The processing circuitry 230 may serve as a controller or control system for the computer system 200 that is to implement the functionality described herein.

The computer system 200 may include an input device interface configured to receive input and selections to be communicated to the computer system 200 when executing instructions, such as from a keyboard, mouse, touch-sensitive surface, etc. Such input devices may be connected to the processing circuitry 230 through the input device interface coupled to the system bus but can be connected through other interfaces, such as a parallel port, an Institute of Electrical and Electronic Engineers (IEEE) 1394 serial port, a Universal Serial Bus (USB) port, an IR interface, and the like. The computer system 200 may include an output device interface configured to forward output, such as to a display, a video display unit (e.g., a liquid crystal display (LCD) or a cathode ray tube (CRT)). The computer system 200 may include a communications interface 220 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### Closing remarks

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present invention which is defined by the following appended claims. In the drawings and specification, there have been disclosed aspects for purposes of illustration only and not for purposes of limitation, the scope of the invention being defined by the following appended claims.

### Claims

1. A computer-implemented traffic planning method (100) for controlling a plurality of vehicles which are movable among multiple shared resources in accordance with predefined motion commands, each resource representing space for transport or parking, a communication channel, maintenance machinery or additional equipment for optional temporary use, wherein a vehicle is allowed to move from a first resource to a second resource if the first resource is connected to the second resource and the second resource is not occupied, the method comprising the following steps to be performed by processing circuitry of a computer system:

receiving (110) a transport mission to be carried out by the vehicles;
generating (112) a root node representing an initial resource occupancy of the vehicles;
sequentially generating (114) a search tree from the root node, in which each edge represents a motion command and each node represents a resource occupancy,
wherein each node is associated with a score including an anticipated reward related to the vehicles' fulfilment of the transport mission;
identifying (116), among the nodes of the search tree, a target node with an acceptable score; and
deriving (118) a planned sequence of motion commands corresponding to a path from the root node to the target node,
wherein the sequential generating (114) of the search tree comprises:

- generating (114.4) child nodes of a leaf node only if the leaf node satisfies a tree-expansion criterion (114.2);
- evaluating (114.6) any generated child node with respect to the vehicles' fulfilment of the transport mission and assigning a corresponding reward to the child node's score; and
- adding (114.8) an anticipated value of the assigned reward to the scores of all parent nodes of said child node,

**characterized in that** the tree-expansion criterion is satisfied if the leaf node represents a resource occupancy which is not a deadlock state and/or no vehicle has a battery-energy level below an energy threshold.

2. The method of any of the preceding claims, wherein the tree-expansion criterion (114.2) includes a sub-criterion governing how many child nodes are to be generated.

3. The method of claim 2, wherein the sub-criterion stipulates that two or more child nodes are to be generated if the leaf node represents a resource occupancy where at least one vehicle has entered a conflict zone and/or at least one vehicle is located in a split zone.

4. The method of any of the preceding claims, wherein the leaf node shall remain a leaf node in the search tree if the tree-expansion criterion is not satisfied.

5. The method of any of the preceding claims, wherein evaluating (114.6) a child node comprises simulating vehicle movements subject to rule-based motion commands for a predetermined period of time.

6. The method of any of the preceding claims, wherein evaluating (114.6) a child node comprises performing one or more simulations of vehicle movements subject to random motion commands for a predetermined period of time, and assigning the reward based on that one of the simulations which has the best fulfilment of the transport mission.

7. The method of any of the preceding claims, wherein the score of a node further includes a cost of executing all motion commands from the root node to said node.

8. The method of any of the preceding claims, wherein the score of a node further includes a cost representing a total standstill time of the vehicles.

9. The method of any of the preceding claims, wherein the acceptable score of the identified (116) target node is a maximal score in the search tree and/or exceeds a predefined score threshold.

10. The method of any of the preceding claims, wherein the vehicles are autonomous vehicles.

11. A computer system (200) comprising processing circuitry (230) configured to control a plurality of vehicles (299), which are movable among multiple shared resources (wp1, ..., wp8) in accordance with predefined motion commands, each resource representing space for transport or parking, a communication channel, maintenance machinery or additional equipment for optional temporary use, wherein a vehicle is allowed to move from a first resource to a second resource if the first resource is connected to the second resource and the second resource is not occupied, the computer system being configured to:

receive a transport mission to be carried out by the vehicles;
generate a root node representing an initial resource occupancy of the vehicles;
sequentially generate a search tree from the root node, in which each edge represents a motion command and each node represents a resource occupancy, wherein each node is associated with a score including an anticipated reward related to the vehicles' fulfilment of the transport mission;
identify, among the nodes of the search tree, a target node with an acceptable score; and
derive a planned sequence of motion commands corresponding to a path from the root node to the target node, wherein the computer system, in generating the search tree, is configured to:

- generate child nodes of a leaf node only if the leaf node satisfies a tree-expansion criterion;
- evaluate any generated child node with respect to the vehicles' fulfilment of the transport mission and assign a corresponding reward to the child node's score; and
- add an anticipated value of the assigned reward to the scores of all parent nodes of said child node,

**characterized in that** the tree-expansion criterion is satisfied if the leaf node represents a resource occupancy which is not a deadlock state and/or no vehicle has a battery-energy level below an energy threshold.

12. A vehicle comprising the computer system of claim 11.

13. A computer program product comprising program code which, when the program code is executed by a processing circuitry, cause the processing circuitry to perform the method of any of claims 1 to 10.

14. A non-transitory computer-readable storage medium comprising instructions which when executed by processing circuitry, cause the processing circuitry to perform the method of any of claims 1 to 10.

**Patentansprüche**

1. Computer-implementiertes Verkehrsplanungsverfahren (100) zur Steuerung mehrerer Fahrzeuge, die zwischen mehreren gemeinsamen Betriebsmitteln in Übereinstimmung mit vordefinierten Bewegungsbefehlen beweglich sind, wobei jedes Betriebsmittel einen Raum für den Transport oder das Parken, einen Kommunikationskanal, Wartungsmaschinen oder eine zusätzliche Ausrüstung für eine optionale temporäre Verwendung darstellt, wobei es einem Fahrzeug erlaubt ist, sich von einem ersten Betriebsmittel zu einem zweiten Betriebsmittel zu bewegen, wenn das erste Betriebsmittel mit dem zweiten Betriebsmittel verbunden ist und das zweite Betriebsmittel nicht besetzt ist, das Verfahren umfassend die folgenden Schritte, die von den Verarbeitungsschaltungen eines Computersystems durchzuführen sind:

Empfangen (110) eines Transportauftrags, der von den Fahrzeugen auszuführen ist;
Erzeugen (112) eines Wurzelknotens, der eine anfängliche Betriebsmittelbelegung der Fahrzeuge darstellt;
sequentielles Erzeugen (114) eines Suchbaums vom Wurzelknoten aus, in dem jede Kante einen Bewegungsbefehl und jeder Knoten eine Betriebsmittelbelegung darstellt, wobei jedem Knoten eine Punktzahl zugeordnet ist, die eine erwartete Belohnung in Bezug auf die Erfüllung des Transportauftrags durch die Fahrzeuge enthält;
Identifizieren (116) eines Zielknotens mit einer akzeptablen Punktzahl unter den Knoten des Suchbaums; und
Ableiten (118) einer geplanten Abfolge von Bewegungsbefehlen, die einem Pfad vom Wurzelknoten zum Zielknoten entspricht,
wobei das sequentielle Erzeugen (114) des Suchbaums umfasst:

- Erzeugen (114.4) von untergeordneten Knoten eines Blattknotens nur dann, wenn der Blattknoten ein Baumerweiterungskriterium (114.2) erfüllt;
- Bewerten (114.6) jedes erzeugten untergeordneten Knotens in Bezug auf die Erfüllung des Transportauftrags durch die Fahrzeuge und Zuweisen einer entsprechenden Belohnung zur Punktzahl des untergeordneten Knotens; und
- Addieren (114.8) eines voraussichtlichen Wertes der zugewiesenen Belohnung zu den Punktzahlen aller übergeordneten Knoten des untergeordneten Knotens,

**dadurch gekennzeichnet, dass** das Baumerweiterungskriterium erfüllt ist, wenn der Blattknoten eine Betriebsmittelbelegung darstellt, die kein Deadlock-Zustand ist und/oder kein Fahrzeug ein Batterie-Energieniveau unterhalb eines Energieschwellenwerts aufweist.

2. Verfahren nach einem der vorhergehenden Ansprüche, wobei das Baumerweiterungskriterium (114.2) ein Unterkriterium aufweist, das bestimmt, wie viele untergeordnete Knoten erzeugt werden sollen.

3. Verfahren nach Anspruch 2, wobei das Unterkriterium festlegt, dass zwei oder mehr untergeordnete Knoten zu erzeugen sind, wenn der Blattknoten eine Betriebsmittelbelegung darstellt, bei der mindestens ein Fahrzeug in eine Konfliktzone eingefahren ist und/oder sich mindestens ein Fahrzeug in einer Split-Zone befindet.

4. Verfahren nach einem der vorhergehenden Ansprüche, wobei der Blattknoten ein Blattknoten in dem Suchbaum bleibt, wenn das Baumerweiterungskriterium nicht erfüllt ist.

5. Verfahren nach einem der vorhergehenden Ansprüche, wobei das Bewerten (114.6) eines untergeordneten Knotens die Simulation von Fahrzeugbewegungen umfasst, die regelbasierten Bewegungsbefehlen für eine vorbestimmte Zeitspanne unterliegen.

6. Verfahren nach einem der vorhergehenden Ansprüche, wobei das Bewerten (114.6) eines untergeordneten Knotens die Durchführung einer oder mehrerer Simulationen von Fahrzeugbewegungen umfasst, die zufälligen Bewegungsbefehlen für eine vorbestimmte Zeitspanne unterliegen, und die Zuweisung der Belohnung auf der Grundlage derjenigen der Simulationen, die die beste Erfüllung des Transportauftrags aufweist.

7. Verfahren nach einem der vorhergehenden Ansprüche, wobei die Punktzahl eines Knotens ferner die Kosten für die Ausführung aller Bewegungsbefehle vom Wurzelknoten bis zu diesem Knoten aufweist.

8. Verfahren nach einem der vorhergehenden Ansprüche, wobei die Punktzahl eines Knotens ferner Kosten aufweist, die eine Gesamtstillstandszeit der Fahrzeuge darstellen.

9. Verfahren nach einem der vorhergehenden Ansprüche, wobei die akzeptable Punktzahl des identifizierten (116) Zielknotens eine maximale Punktzahl im Suchbaum ist und/oder einen vordefinierten Punktzahlschwellenwert überschreitet.

10. Verfahren nach einem der vorhergehenden Ansprüche, wobei das Fahrzeug ein autonomes Fahrzeug ist.

11. Computersystem (200) umfassend eine Verarbeitungsschaltung (230), die konfiguriert ist, mehrere Fahrzeuge (299) zu steuern, die zwischen mehreren gemeinsamen Betriebsmitteln (wp1, ..., wp8) in Übereinstimmung mit vordefinierten Bewegungsbefehlen beweglich sind, wobei jedes Betriebsmittel einen Raum für den Transport oder das Parken, einen Kommunikationskanal, Wartungsmaschinen oder eine zusätzliche Ausrüstung für eine optionale temporäre Verwendung darstellt, wobei es einem Fahrzeug erlaubt ist, sich von einem ersten Betriebsmittel zu einem zweiten Betriebsmittel zu bewegen, wenn das erste Betriebsmittel mit dem zweiten Betriebsmittel verbunden ist und das zweite Betriebsmittel nicht belegt ist, wobei das Computersystem konfiguriert ist, zum:

Empfangen eines Transportauftrags, der von den Fahrzeugen auszuführen ist;
Erzeugen eines Wurzelknotens, der eine anfängliche Betriebsmittelbelegung der Fahrzeuge darstellt;
sequentielles Erzeugen eines Suchbaums vom Wurzelknoten aus, in dem jede Kante einen Bewegungsbefehl und jeder Knoten eine Betriebsmittelbelegung darstellt, wobei jedem Knoten eine Punktzahl zugeordnet ist, die eine erwartete Belohnung in Bezug auf die Erfüllung des Transportauftrags durch die Fahrzeuge enthält;
Identifizieren eines Zielknotens mit einer akzeptablen Punktzahl unter den Knoten des Suchbaums; und
Ableiten einer geplanten Abfolge von Bewegungsbefehlen, die einem Pfad vom Wurzelknoten zum Zielknoten entspricht,
wobei das Computersystem beim Erzeugen des Suchbaums konfiguriert ist, zum:

- Erzeugen von untergeordneten Knoten eines Blattknotens nur dann, wenn der Blattknoten ein Baumerweiterungskriterium erfüllt;
- Bewerten jedes erzeugten untergeordneten Knotens in Bezug auf die Erfüllung des Transportauftrags durch die Fahrzeuge und Zuweisen einer entsprechenden Belohnung zur Punktzahl des untergeordneten Knotens; und
- Addieren eines voraussichtlichen Wertes der zugewiesenen Belohnung zu den Punktzahlen aller übergeordneten Knoten des untergeordneten Knotens,

**dadurch gekennzeichnet, dass** das Baumerweiterungskriterium erfüllt ist, wenn der Blattknoten eine Betriebsmittelbelegung darstellt, die kein Deadlock-Zustand ist und/oder kein Fahrzeug ein Batterie-Energieniveau unterhalb eines Energieschwellenwerts aufweist.

12. Fahrzeug umfassend ein Computersystem nach Anspruch 11.

13. Computerprogrammprodukt umfassend einen Programmcode, der, wenn der Programmcode von einer Verarbeitungsschaltung ausgeführt wird, die Verarbeitungsschaltung veranlasst, das Verfahren nach einem der Ansprüche 1 bis 10 durchzuführen.

14. Nicht-transitorisches computerlesbares Speichermedium, das Anweisungen umfasst, die, wenn sie von einer Verarbeitungsschaltung ausgeführt werden, die Verarbeitungsschaltung veranlassen, das Verfahren nach einem der Ansprüche 1 bis 10 durchzuführen.

**Revendications**

1. Procédé de planification de la circulation mis en œuvre par ordinateur (100) pour commander une pluralité de véhicules qui sont mobiles parmi de multiples ressources partagées conformément à des commandes de mouvement prédéfinies, chaque ressource représentant un espace de transport ou de stationnement, un canal de communication, des machines de maintenance ou un équipement supplémentaire pour une utilisation temporaire facultative, dans lequel un véhicule est autorisé à se déplacer d'une première source à une seconde ressource si la première ressource est connectée à la seconde ressource et si la seconde ressource n'est pas occupée,

   le procédé comprenant les étapes suivantes à effectuer par le circuit de traitement d'un système informatique :

   recevoir (110) une mission de transport à effectuer par les véhicules ;
   générer (112) un nœud racine représentant une occupation initiale des ressources des véhicules ;
   générer séquentiellement (114) une arborescence de recherche à partir du nœud racine, dans laquelle chaque bord représente une commande de mouvement et chaque nœud représente une occupation des ressources, chaque nœud étant associé à un score comprenant une récompense anticipée liée à l'accomplissement de la mission de transport par les véhicules ;
   identifier (116), parmi les nœuds de l'arborescence de recherche, un nœud cible avec une note acceptable ; et
   dériver (118) une séquence planifiée de commandes de mouvement correspondant à un chemin du nœud racine au nœud cible,
   la génération séquentielle (114) de l'arborescence de recherche comprenant :

   - la génération (114.4) de nœuds enfants d'un nœud feuille uniquement si le nœud feuille satisfait à un critère d'expansion d'arborescence ou (114.2) ;
   - l'évaluation (114.6) de tout nœud enfant généré par rapport à la réalisation de la mission de transport par les véhicules et attribuer une récompense correspondante au score du nœud enfant ; et
   - l'ajout (114.8) d'une valeur anticipée de la récompense attribuée aux scores de tous les nœuds parents dudit nœud enfant,

   **caractérisé en ce que** le critère d'expansion arborescente est satisfait si le nœud feuille représente une occupation de ressource qui n'est pas un état de blocage et/ou si aucun véhicule ne présente un niveau d'énergie de batterie inférieur à un seuil d'énergie.

2. Procédé selon l'une quelconque des revendications précédentes, dans lequel le critère d'expansion d'arborescence (114.2) comprend un sous-critère régissant le nombre de nœuds enfants qui doivent être générés.

3. Procédé selon la revendication 2, dans lequel le sous-critère stipule que deux nœuds enfants ou plus doivent être générés si le nœud feuille représente une occupation de ressource où au moins un véhicule est entré dans une zone de conflit et/ou au moins un véhicule est situé dans une zone fragmentée.

4. Procédé selon l'une quelconque des revendications précédentes, dans lequel le nœud feuille doit rester un nœud feuille dans l'arborescence de recherche si le critère d'expansion d'arborescence n'est pas satisfait.

5. Procédé selon l'une quelconque des revendications précédentes, dans lequel l'évaluation (114.6) d'un nœud enfant comprend une ou plusieurs simulations de mouvements de véhicule soumis à des commandes de mouvement basées sur des règles pendant une période prédéterminée.

6. Procédé selon l'une quelconque des revendications précédentes, dans lequel l'évaluation (114.6) d'un nœud enfant comprend l'exécution d'une ou plusieurs simulations de mouvements de véhicule soumis à des commandes de mouvement aléatoires pendant une période prédéterminée, et l'attribution de la récompense sur la base de celle des simulations qui a la meilleure exécution de la mission de transport.

7. Procédé selon l'une quelconque des revendications précédentes, dans lequel le score d'un nœud comprend en outre un coût d'exécution de toutes les commandes de déplacement du nœud racine audit nœud.

8. Procédé selon l'une quelconque des revendications précédentes, dans lequel le score d'un nœud comprend en outre un coût représentant un temps d'arrêt total des véhicules.

9. Procédé selon l'une quelconque des revendications précédentes, dans lequel le score acceptable du nœud cible identifié (116) est un score maximal dans l'arborescence de recherche et/ou dépasse un seuil de score prédéfini.

10. Procédé selon l'une quelconque des revendications précédentes, dans lequel les véhicules sont des véhicules autonomes.

11. Système informatique (200) comprenant un circuit de traitement (230) configuré pour commander une pluralité de véhicules (299), qui sont mobiles parmi de multiples sources partagées (wp1, ..., wp8) conformément à des commandes de mouvement prédéfinies, chaque espace de ressources pour le transport ou le stationnement, un canal de communication, des machines de maintenance ou un équipement supplémentaire pour une utilisation temporaire facultative, un véhicule étant autorisé à se déplacer d'une première ressource à une seconde ressource si la première ressource est connectée à la seconde ressource et si la seconde ressource n'est pas occupée, le système informatique étant configuré pour :

recevoir une mission de transport à effectuer par les véhicules ;
générer un nœud racine représentant une occupation initiale des ressources des véhicules ;
générer séquentiellement une arborescence de recherche à partir du nœud racine, dans laquelle chaque bord représente une commande de mouvement et chaque nœud représente une occupation des ressources, chaque nœud étant associé à un score comprenant une récompense anticipée liée à l'accomplissement de la mission de transport par les véhicules ;
identifier, parmi les nœuds de l'arborescence de recherche, un nœud cible avec une note acceptable ; et
dériver une séquence planifiée de commandes de mouvement correspondant à un chemin du nœud racine au nœud cible,
le système informatique, lors de la génération de l'arborescence de recherche, étant configuré pour :

- générer les nœuds enfants d'un nœud feuille uniquement si le nœud feuille satisfait à un critère d'expansion d'arborescence ;
- évaluer tout nœud enfant généré par rapport à l'accomplissement de la mission de transport par les véhicules et attribuer une récompense correspondante au score du nœud enfant ; et
- ajouter une valeur anticipée de la récompense attribuée aux scores de tous les nœuds parents dudit nœud enfant,

**caractérisé en ce que** le critère d'expansion d'arborescence est satisfait si le nœud feuille représente une occupation de ressource qui n'est pas un état de blocage et/ou si aucun véhicule ne présente un niveau d'énergie de batterie inférieur à un seuil d'énergie.

12. Véhicule comprenant le système informatique selon la revendication 11.

13. Produit de programme informatique comprenant un code de programme qui, lorsque le code de programme est exécuté par un circuit de traitement, amène le circuit de traitement à exécuter le procédé selon l'une quelconque des revendications 1 à 10.

14. Support de stockage lisible par ordinateur non transitoire comprenant des instructions qui, lorsqu'elles sont exécutées par un circuit de traitement, amènent le circuit de traitement à exécuter le procédé selon l'une quelconque des revendications 1 à 10.

*100*

*110*

*112*

*114.2*

*N*

*114*

*Y*

*114.4*

*114.6*

*114.8*

*114.10*

*Y*

*N*

*116*

*118*

*Fig. 1*

Fig. 2

EP 4 462 403 B1

*Fig. 3*

400

402

404

*Fig. 4*

*t=0*

*t=1*

*t=2*

*t=3*

*t=4*

*Fig. 5*

Fig. 6A

Fig. 6B

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   EP 4095640 A1

*   US 2020363800 A1

**Non-patent literature cited in the description**

*   **SABARISH SRIDHAR**. *Selection of Features for ML based commanding of autonomous vehicles*, 29 October 2020, https://www.diva-portal.org/smash/-get/diva2:1508399/ FULLTEXT01.pdf